# EUROPÄISCHE PATENTANMELDUNG

(11) **EP 1 825 990 A1**
(43) Veröffentlichungstag der Anmeldung: **29.08.2007**
(21) Anmeldenummer: 07000839.6
(22) Anmeldetag: 17.01.2007
(51) Int. Cl.: B29C 67/00, B29C 63/02

(54) **Verfahren zur Herstellung eines beschichteten Formkörpers**

(30) Priorität: 28.02.2006 DE 10609095
(71) Anmelder: Bayerische Motorenwerke Aktiengesellschaft, 80809 München (DE)
(72) Erfinder: Augsburg, Kerstin, 85229 Markt Indersdorf (DE)

(57) **Zusammenfassung**

Verfahren zur Herstellung eines beschichteten Formkörpers, umfassend einen Tragkörper und eine Deckschicht, wobei der Tragkörper generativ gefertigt und mit einem Oberflächenfurnier als Deckschicht versehen wird.

## Beschreibung

Die Erfindung betrifft ein Verfahren zur Herstellung eines beschichteten Formkörpers, umfassend einen Tragkörper und eine Deckschicht.

Verfahren zur Herstellung derartiger beschichteter Formkörper sind generell bekannt. Beispielsweise offenbart die DE-OS 1 405 184 ein Verfahren zur Herstellung von mit einer Furnierschicht aus Edelholz bekleideten Formteilen, wobei der Tragkörper aus Metall oder Kunststoff besteht und durch Ziehen oder Pressen hergestellt ist. Bei der Herstellung der bekannten Tragkörper waren allerdings bisher entweder zur Fertigung in großen Stückzahlen entsprechend investintensive Werkzeuge oder zur Fertigung in kleineren Stückzahlen eine aufwändige Einzelfertigungen erforderlich.

Ferner sind Verfahren zur Herstellung von dreidimensionalen Modellen aus Kunststoff nach Maßgabe von gespeicherten, geometrischen Daten bekannt, beispielsweise offenbart die DE 199 18 981 A1 ein solches Verfahren, bei dem eine mit Infrarot-Laserstrahlen arbeitende, computergestützte Anlage zur Direktherstellung von Prototypen und Modellen verwendet wird. Nach derartigen Verfahren hergestellte Modelle wurden allerdings bisher nicht mit Oberflächenfurnieren als Deckschicht versehen.

Aufgabe der Erfindung ist es daher, ein eingangs genanntes Verfahren bereit zu stellen, mit dem im Falle geringer Stückzahlen eine aufwändige Einzelfertigung von Tragkörpern und im Falle größerer Stückzahlen die Anschaffung investintensiver Werkzeuge vermieden werden kann und dennoch hochwertige beschichtet Formkörper hergestellt werden können. Insbesondere soll ein Verfahren bereitgestellt werden, welches eine wirtschaftliche Herstellung derartiger beschichteter Formkörper in Einzelfertigung bis hin zu Kleinserien erlaubt.

Die Lösung der Aufgabe erfolgt mit einem Verfahren mit den Merkmalen des Anspruchs 1, wobei erfindungsgemäß der Tragkörper generativ gefertigt und mit einem Oberflächenfurnier als Deckschicht versehen wird. Dadurch ist es möglich, hochwertige furnierte Formkörper herzustellen, ohne bei einer Einzelfertigung beispielsweise aufwändig Echtholzträger fertigen zu müssen, die durch ein Verpressen von Holz und Aluminium in Werkzeugen verpresst werden, oder bei Kleinserien investintensive Werkzeuge anschaffen zu müssen. Das erfindungsgemäße Verfahren zeichnet sich darüber hinaus durch seine besondere Flexibilität aus. Zudem kann das Verfahren eingesetzt werden, um im Vorfeld von Großserien Formkörper mit Oberflächenfurnier als Deckschicht zu testen, bevor in teuere Werkzeuge investiert wird.

Besonders vorteilhafte Weiterbildungen des erfindungsgemäßen Verfahrens sind Gegenstand der Unteransprüche.

Zweckmäßigerweise wird dabei der Tragkörper direkt auf Basis rechnerinterner Datenmodelle aus einem formlosen oder formneutralen Material mittels chemischer und/oder physikalischer Prozesse gefertigt, wobei es vorteilhaft ist, wenn eines der Verfahren Stereolithografie, selektives Lasersintern, Fused Deposition Modeling, Laminated Object Modelling oder 3D Printing angewandt wird. Der besondere Vorteil liegt dabei darin; dass es sich zwar um urformende Fertigungsverfahren handelt, jedoch für ein konkretes Erzeugnis keine speziellen Werkzeuge erforderlich sind, die die spezielle Geometrie des Werkstückes gespeichert haben, wie beispielsweise Gussformen.

Besonders bevorzugt ist es, wenn das Verfahren zur Erzeugung des Tragkörpers geeignet ist, einen Tragkörper zu erzeugen, der wenigstens bis zu derjenigen Temperatur formbeständig ist, bei der ein nachfolgender Furnierprozess erfolgt. Zweckmäßigerweise ist das Verfahren zur Erzeugung des Tragkörpers geeignet, einen bis wenigstens 100°C, insbesondere einen bis wenigstens 150°C temperaturstabilen Tragkörper zu erzeugen.

Vorzugsweise wird der Tragkörper in einem Furnierprozess mit einem Echtholz-Oberflächenfurnier versehen, wobei währen des Furnierprozesses eine Temperatur von 150°C, insbesondere von 100°C, im wesentlichen nicht überschritten wird.

Als besonders günstig hat sich es sich erwiesen, wenn im Rahmen des Furnierprozesses der Tragkörper angeraut wird, dann mit einer pigmentierten Grundierung und einem Klebstoff versehen wird, dann in einer Vakuumpresse ein Oberflächenfurnier aufgebracht wird und abschließend der beschichteten Formkörper in Form geschliffen und lackiert wird.

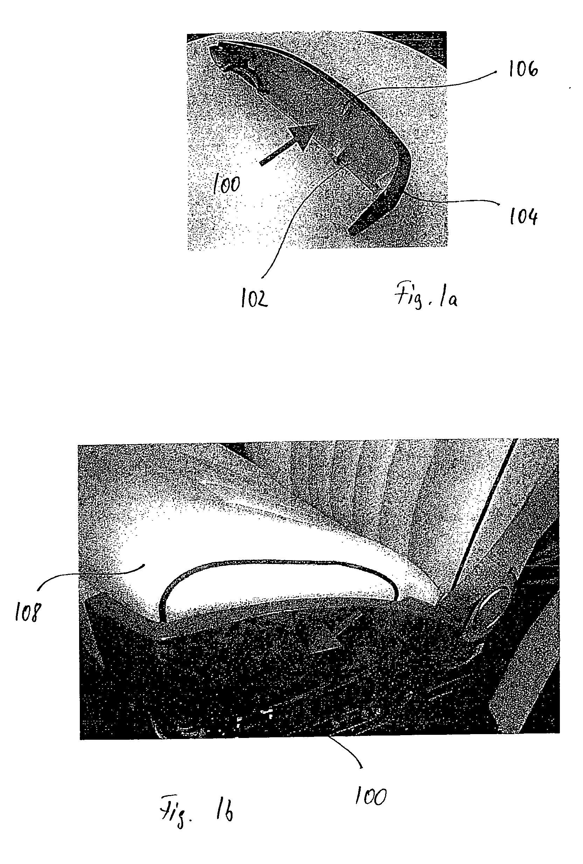

Nachfolgend wird eine besonders zu bevorzugende Weiterbildung des erfindungsgemäßen Verfahrens anhand eines danach hergestellten beschichteten Formkörpers unter Bezugnahme auf Figuren näher erläutert, dabei zeigen schematisch und beispielhaft
- Figur 1a: einen beschichteten Formkörper umfassend einen generativ gefertigten Tragkörper und ein Oberflächenfurnier als Deckschicht,
- Figur 1 b: einen beschichteten Formkörper eingebaut in ein Kraftfahrzeug.

Figur 1 a zeigt einen beschichteten Formkörper (100) umfassend einen generativ gefertigten Tragkörper (102) und ein Oberflächenfurnier als Deckschicht (104). Zur Befestigung weist der Formkörper (100) Befestigungselemente (106) auf, die vorliegende integraler Bestandteil des Tragkörpers (102) sind. Gegebenenfalls können auch beispielsweise Gewindebuchsen oder ähnliche Befestigungsmittel als Befestigungselemente (106) in den Tragkörper (102) eingebracht sein. Der Tragkörper (102) ist vorliegend werkzeuglos generativ Schicht für Schicht im Rapid-Prototyping-Verfahren mittels selektivem Strahlschmelzen gefertigt und ist bis zu einer Temperatur von 160°C thermisch stabil. Außerdem ist der Tragkörper (102) derart klimabeständig, dass er in Kraftfahrzeugen einsetzbar ist.

Wesentlich ist dabei, dass die Fertigung des Tragkörpers (102) direkt auf Basis rechnerinterner Datenmodelle aus formlosen oder formneutralen Material mittels chemischer und/oder physikalischer Prozesse erfolgt. Die Daten können beispielsweise über eine STL-Schnittstelle (Standard Transformation Language) übergeben werden, als formloses Material können Flüssigkeiten oder Pulver bzw. als formneutrales Material band- oder drahtförmige Materialien verwendet werden.

Beispielsweise kann eine Herstellung des Tragkörpers (102) erfolgen, indem ein lichtaushärtender Kunststoff (Photopolymer), z.B. Epoxidharz, von einem Laser in dünnen Schichten (Standardschichtstärke im Bereich 0,05 ... 0,25 mm, bei Mikrostereolithografie auch darunter) ausgehärtet wird. Diese Fertigung erfolgt in einem Bad, welches mit den Basismonomeren des lichtempfindlichen (photosensitiven) Kunststoffes gefüllt ist, wobei nach jedem Schritt das Werkstück um den Betrag einer Schichtstärke abgesenkt und der flüssige Kunststoff an der Oberfläche durch einen Wischer gleichmäßig verteilt wird. Nachfolgend fährt ein Laser, der von einem Computer über bewegliche Spiegel gesteuert wird, auf der neuen Schicht über die Flächen, die ausgehärtet werden sollen. Nach dem Aushärten erfolgt der nächste Schritt, sodass nach und nach der Tragkörper (102) entsteht. Da das vom Laser gehärtete Harz noch relativ weich ist und auch bestimmte Formelemente (z.B. Überhänge) während des Bauprozesses sicher zu fixieren sind, werden bei der Herstellung auch Stützstrukturen mit- "gebaut". Nach dem Bauprozess der Form wird das Modell aus dem Bad entnommen und in einem Schrank unter UV-Licht vollständig ausgehärtet. Anschließend werden die Stützstrukturen entfernt.

Alternativ kann zur Herstellung des Tragkörpers (102) beispielsweise auch ein pulverförmiges Ausgangsmaterial z.B. durch einen CO₂-Laser oder einen Nd:YAG-Laser lokal gesintert oder aufgeschmolzen werden, wobei der pulverförmige Werkstoff auf eine Teileplattform mit Hilfe einer Rakel schichtweise aufgebracht wird. Aus den vorliegenden Daten des Bauteils werden durch Slicen Schichten erzeugt. Diese Schichten werden durch eine Ansteuerung des Laserstrahles entsprechend der geslicten Kontur des Bauteils schrittweise in dem Pulverbett gesintert oder geschmolzen. Schicht für Schicht erfolgt die Bearbeitung bei einer Dicke von 0,001 - 0,2 mm. Dadurch ist es möglich, auch hinterschnittene Konturen zu erzeugen. Bei der Absenkung der Teileplattform stellt ein Pulverbehälter das Pulver für eine weitere Schicht zur Verfügung. Die Energie, die vom Laser zugeführt wird, wird vom Pulver absorbiert und führt zu einem lokal begrenzten Sintern oder Verschmelzen von Partikeln unter Reduktion der Gesamtoberfläche (Sintern).

Ein weiteres mögliches Verfahren zur Herstellung des Tragkörpers (102) umfasst die Verflüssigung eines drahtförmigen Kunststoff- oder Wachsmaterials durch Erwärmung, das beim anschließenden Abkühlen wieder erstarrt. Der Materialauftrag erfolgt durch eine in der Fertigungsebene frei verfahrbaren Heizdüse. Bei der schichtweisen Modellherstellung verbinden sich damit die einzelnen Schichten zu einem komplexen Teil.

Schließlich kann eine Herstellung des Tragkörpers (102) auch durch ein Verfahren erfolgen, bei welchem ein Pulver durch Einspritzen eines Bindemittels gezielt an einzelnen Stellen verfestigt wird.

Das Oberflächenfurnier als Deckschicht ist vorliegend ein Echtholz-Oberflächenfurnier (104), beispielsweise aus einem Edelholz, wie Wurzelholz, Nussholz, Ahornholz, Eschenholz, Mahagoni oder Pappelholz und ist in einem Furnierprozess auf den Tragkörper (102) aufgebracht.

Dabei wird der Tragkörper (102) zuerst angeschliffen, um die Bauteiloberfläche anzurauen, um den in der Regel hellen Tragkörper (102) dem späteren Oberflächenfurnier (104) farblich anzugleichen, wird eine pigmentierte Grundierung aufgebracht. Auf die getrocknete Grundierung wird ein Kleber aufgetragen, auf welchen dann in einer Vakuumpresse das Oberflächenfurnier (104) beispielsweise bei ca. 90°C für 30 Minuten "aufgebacken" wird. Abschließend wird das Furnier noch in Form geschliffen und lackiert.

Figur 1 b zeigt einen beschichteten Formkörper (100) eingebaut in ein Kraftfahrzeug. Vorliegend ist der Formkörper (100) ein Verkleidungsteil eines Kraftfahrzeugsitzes (108). Der Formkörper (100) kann aber auch an anderen Stellen im Kraftfahrzeuginnenraum verbaut werden, beispielsweise im Bereich der Armaturentafel, als Türinnenverkleidung oder im Bereich der Mittelkonsole.

## Patentansprüche

1. Verfahren zur Herstellung eines beschichteten Formkörpers (100), umfassend einen Tragkörper (102) und eine Deckschicht (104), **dadurch gekennzeichnet, dass** der Tragkörper (102) generativ gefertigt und mit einem Oberflächenfurnier als Deckschicht (104) versehen wird.

2. Verfahren nach einem der vorhergehenden Ansprüche, **dadurch gekennzeichnet, dass** der Tragkörper (102) direkt auf Basis rechnerinterner Datenmodelle aus einem formlosen oder formneutralen Material mittels chemischer und/oder physikalischer Prozesse gefertigt wird.

3. Verfahren nach einem der vorhergehenden Ansprüche, **dadurch gekennzeichnet, dass** der Tragkörper (102) nach einem der Verfahren Stereolithografie, selektives Lasersintern, Fused Deposition Modeling, Laminated Object Modelling oder 3D Printing hergestellt wird.

4. Verfahren nach einem der vorhergehenden Ansprüche, **dadurch gekennzeichnet, dass** das Verfahren zur Erzeugung des Tragkörpers (102) geeignet ist, einen Tragkörper (102) zu erzeugen, der wenigstens bis zu derjenigen Temperatur formbeständig ist, bei der ein nachfolgender Furnierprozess erfolgt.

5. Verfahren nach einem der vorhergehenden Ansprüche, **dadurch gekennzeichnet, dass** das Verfahren zur Erzeugung des Tragkörpers (102) geeignet ist, einen bis wenigstens 100°C, insbesondere einen bis wenigstens 150°C temperaturstabilen Tragkörper (102) zu erzeugen.

6. Verfahren nach einem der vorhergehenden Ansprüche, **dadurch gekennzeichnet, dass** der Tragkörper (102) in einem Furnierprozess mit einem Echtholz-Oberflächenfurnier (104) versehen wird.

7. Verfahren nach einem der vorhergehenden Ansprüche, **dadurch gekennzeichnet, dass** währen des Furnierprozesses eine Temperatur von 150°C, insbesondere von 100°C, im wesentlichen nicht überschritten wird.

8. Verfahren nach einem der vorhergehenden Ansprüche, **dadurch gekennzeichnet, dass** der Tragkörper (102) zur Aufbringung des Oberflächenfurniers (104) angeraut wird.

9. Verfahren nach einem der vorhergehenden Ansprüche, **dadurch gekennzeichnet, dass** der Tragkörper (102) nachfolgend mit einer pigmentierten Grundierung versehen wird.

10. Verfahren nach einem der vorhergehenden Ansprüche, **dadurch gekennzeichnet, dass** der Tragkörper (102) nachfolgend mit einem Klebstoff versehen wird.

11. Verfahren nach einem der vorhergehenden Ansprüche, **dadurch gekennzeichnet, dass** auf den Tragkörper (102) nachfolgend beispielsweise in einer Vakuumpresse ein Oberflächenfurnier (104) aufgebracht wird.

12. Verfahren nach einem der vorhergehenden Ansprüche, **dadurch gekennzeichnet, dass** der beschichteten Formkörper (100) nachfolgend in Form geschliffen wird.

13. Verfahren nach einem der vorhergehenden Ansprüche, **dadurch gekennzeichnet, dass** der beschichteten Formkörper (100) nachfolgend lackiert wird.
